(19) Europäisches Patentamt
European Patent Office
Office européen des brevets

(11) **EP 4 502 006 A1**

(12) **EUROPEAN PATENT APPLICATION**
published in accordance with Art. 153(4) EPC


(43) Date of publication:
**05.02.2025 Bulletin 2025/06**

(21) Application number: **23780290.5**

(22) Date of filing: **27.03.2023**

(51) International Patent Classification (IPC):
***C08G 65/40*** (2006.01) ***C08K 3/013*** (2018.01)
***C08L 71/10*** (2006.01) ***C08L 101/00*** (2006.01)

(52) Cooperative Patent Classification (CPC):
**C08G 65/40; C08K 3/013; C08L 71/10; C08L 101/00**

(86) International application number:
**PCT/JP2023/012081**

(87) International publication number:
**WO 2023/190280 (05.10.2023 Gazette 2023/40)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **30.03.2022 JP 2022055983**



(71) Applicants:
- **Honshu Chemical Industry Co., Ltd.**
  **Tokyo 103-0027 (JP)**
- **DAIKIN INDUSTRIES, LTD.**
  **Osaka-shi, Osaka 530-0001 (JP)**

(72) Inventors:
- **HASHIKAWA, Akihiro**
  **Wakayama-shi, Wakayama 641-0007 (JP)**
- **SHIMODA, Tomoaki**
  **Wakayama-shi, Wakayama 641-0007 (JP)**
- **NAKANO, Yasuhiro**
  **Osaka-shi, Osaka 530-8323 (JP)**
- **MATSUMOTO, Haruna**
  **Osaka-shi, Osaka 530-8323 (JP)**

(74) Representative: **Grünecker Patent- und Rechtsanwälte**
**PartG mbB**
**Leopoldstraße 4**
**80802 München (DE)**


(54) **POLYETHER NITRILE MOLDING MATERIAL, METHOD FOR PRODUCING SAME, AND METHOD FOR PRODUCING POLYETHER NITRILE RESIN COMPOSITION MOLDING MATERIAL**


(57) An object is to provide a polyether nitrile molding material that exhibits high flowability during melt molding. As a solution, provided is a polyether nitrile molding material obtained by molding a polyether nitrile that has a melt flow rate (MFR) of 1 g/10 min or more as measured at 390°C under a load of 5000 g in accordance with ISO 1133 after being heated in air at 400°C for 10 minutes.


FIG. 1

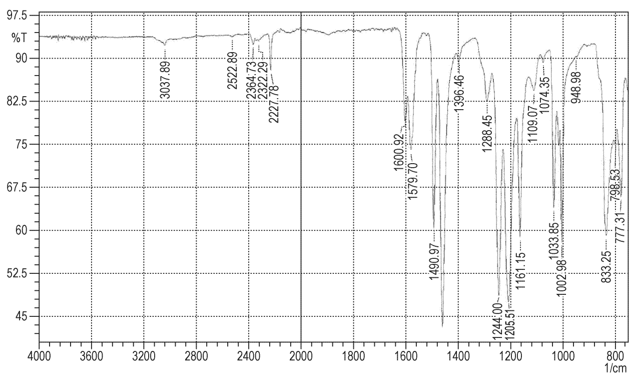





EP 4 502 006 A1

## Description

### Technical Field

The present invention relates to a polyether nitrile molding material that exhibits high flowability during molding, a method for producing the polyether nitrile molding material, a polyether nitrile resin composition molding material that exhibits high flowability during molding, and a method for producing the polyether nitrile resin composition molding material.

### Background Art

Aromatic ether copolymers are not only excellent in heat resistance, flame resistance, chemical resistance, and mechanical strength but also are thermoplastic and can be molded by heating, and thus are useful resins that can provide various molded articles such as filaments, films, sheets, tubes, pipes, and round bars through molding methods such as injection molding, extrusion molding, and heat compression molding.

(Co)polymers are generally heated, melted, and kneaded with resin materials added and then formed into molding materials (resin compositions) such as pellets and chips, which are processed into various molded articles, but aromatic ether copolymers are useful as base resins for molding materials (resin compositions).

Polyether nitrile (e.g., PTLs 1 and 2), which is one of the aromatic ether copolymers, is a resin having the highest level of heat resistance and high mechanical strength among thermoplastic resins. This is obtained in the form of a polymer powder by cleaning and drying a polyether nitrile obtained by a polycondensation reaction, and this powder is used in the form of a molding material such as pellets or chips for ease of processing.

Polyether nitrile is a resin that has a very high melting point and needs to be molded at a high temperature close to 400°C.

### Citation List

### Patent Literature

PTL 1: Japanese Unexamined Patent Application Publication No. 60-147439
PTL 2: Japanese Unexamined Patent Application Publication No. 61-055120

### Summary of Invention

### Technical Problem

The present inventors have found a problem that when a polyether nitrile powder is subjected to melt kneading or heat compression molding to be formed into a molding material such as pellets or chips, flowability greatly decreases.

An object of the present invention is to provide a molding material that exhibits high flowability during molding, the molding material being obtained using a polyether nitrile, and a method for producing the molding material.

### Solution to Problem

The present inventors have previously revealed that when a polyether nitrile is molded in the presence of oxygen in air using a molding machine such as a kneader or a compressor in order to provide a molding material such as pellets or chips, only those which have decreased flowability can be obtained, but when the molding is performed under exclusion of oxygen, pellets having high flowability can be obtained.

This time, the present inventors have elucidated the mechanism that when hydroxy groups are present at ends of a polyether nitrile, cross-linking due to intermolecular oxidative coupling is very likely to occur at high temperature in the presence of oxygen, resulting in a decrease in flowability.

Examples of cross-linking reactions by oxidative coupling of a polyether nitrile using 4,4'-biphenol (BP) as an aromatic dihydroxy compound (I) and 2,6-dichlorobenzonitrile as a dihalobenzonitrile compound (II) are shown below.

[Chem. 1]

Oxidative cross-linking reaction A

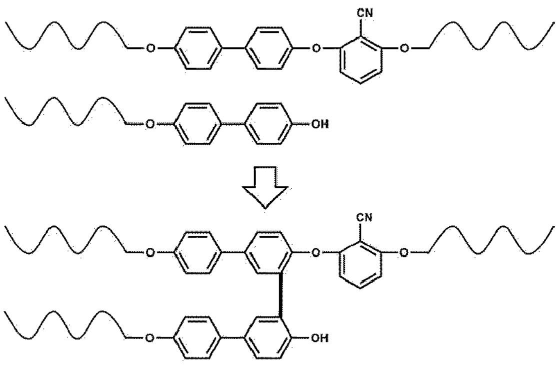

Oxidative cross-linking reaction B

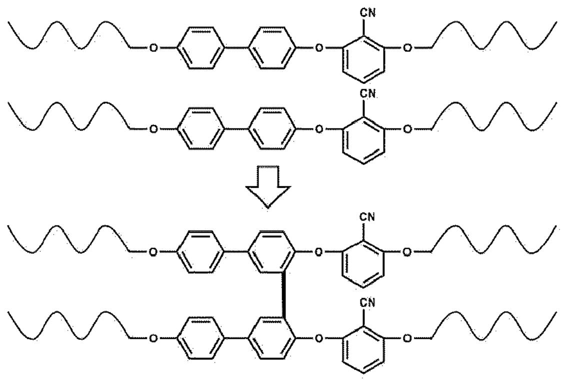

An oxidation experiment in which model compounds a and b represented by the following chemical structural formulae were used in the same molar amount and mixed, and the mixture was heated in air at 400°C for 10 minutes, was conducted. From the results, that is, the amount of consumption of model compounds a and b and the amount of compounds c and d produced as a result of acid value coupling, it was confirmed that the rate of oxidative cross-linking reaction A in which hydroxy groups were present at ends was at least three times the rate of oxidative cross-linking reaction B.

[Chem. 2]

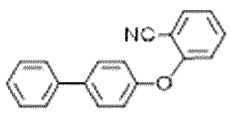

a

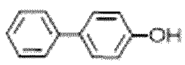

b

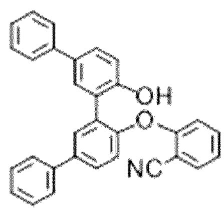

c

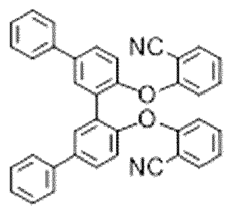

d

Thus, as a result of intensive studies, the present inventors have found that by using a polyether nitrile that has a melt flow rate (MFR) of 1 g/10 min or more as measured at 390°C under a load of 5000 g after being heated in air at 400°C for 10 minutes, preferably a polyether nitrile with no hydroxy groups at ends, a polyether nitrile molding material that exhibits high flowability during molding is obtained, thereby completing the present invention.

The present invention is as follows.

1. A polyether nitrile molding material obtained by molding a polyether nitrile that has a melt flow rate (MFR) of 1 g/10 min or more as measured at 390°C under a load of 5000 g in accordance with ISO 1133 after being heated in air at 400°C for 10 minutes.
2. The polyether nitrile molding material according to 1., wherein the polyether nitrile is a polyether nitrile having no hydroxy groups.
3. The polyether nitrile molding material according to 2., wherein the polyether nitrile is a polyether nitrile having a repeating unit represented by general formula (1).

[Chem. 3]

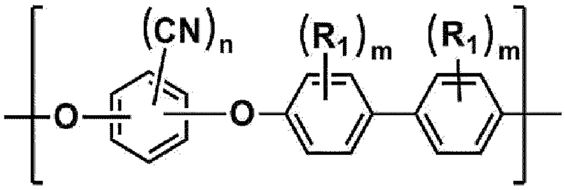

(1)

(In the formula, each $R_1$ independently represents a linear or branched alkyl group having 1 to 6 carbon atoms, a cyclic alkyl group having 5 or 6 carbon atoms, or a phenyl group, each m independently represents an integer of 0 to 4, and n represents an integer of 1 to 4.)

4. The polyether nitrile molding material according to 3., wherein the polyether nitrile having a repeating unit represented by general formula (1) is a repeating unit represented by chemical formula (1-1).

[Chem. 4]

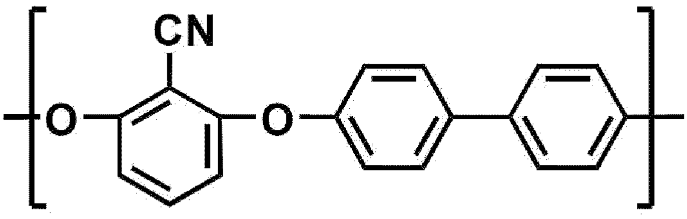

(1-1)

5. The polyether nitrile molding material according to 3., wherein the polyether nitrile is a polyether nitrile obtained by subjecting an aromatic dihydroxy compound (I) represented by general formula (2) and a dihalobenzonitrile compound (II) represented by general formula (3) to a desalting polycondensation reaction in the presence of a basic compound with the dihalobenzonitrile compound (II) being present at a molar ratio in a range of more than 1 relative to the aromatic dihydroxy compound (I).

[Chem. 5]

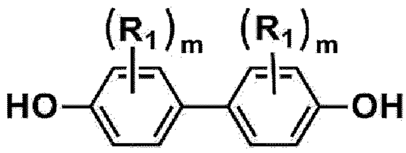

(2)

(In the formula, $R_1$ and m are as defined in general formula (1).)

[Chem. 6]

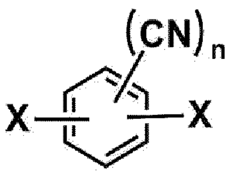

(3)

(In the formula, each X independently represents a halogen atom, and n is as defined in general formula (1).)

6. The polyether nitrile molding material according to 5., wherein at least 4,4'-biphenol is used as the aromatic dihydroxy compound (I), and at least 2,6-dichlorobenzonitrile is used as the dihalobenzonitrile compound (II).

7. The polyether nitrile molding material according to any one of 1. to **6.,** wherein the molding is performed under exclusion of oxygen or in an inert atmosphere.

8. A polyether nitrile resin composition molding material obtained by molding a polyether nitrile resin composition

containing a polyether nitrile that has a melt flow rate (MFR) of 1 g/10 min or more as measured at 390°C under a load of 5000 g in accordance with ISO 1133 after being heated in air at 400°C for 10 minutes and at least one selected from the group consisting of (A) to (C): a thermoplastic resin material (A), an additive (B), and a filler (C).

9. The polyether nitrile resin composition molding material according to 8., wherein the polyether nitrile is a polyether nitrile having no hydroxy groups.

10. The polyether nitrile resin composition molding material according to 9., wherein the polyether nitrile is a polyether nitrile having a repeating unit represented by general formula (1).

[Chem. 7]

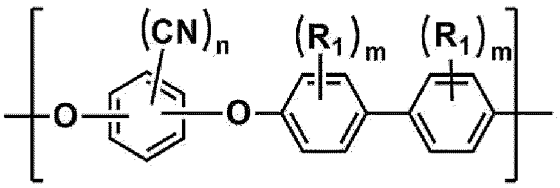

(1)

(In the formula, each $R_1$ independently represents a linear or branched alkyl group having 1 to 6 carbon atoms, a cyclic alkyl group having 5 or 6 carbon atoms, or a phenyl group, each m independently represents an integer of 0 to 4, and n represents an integer of 1 to 4.)

11. The polyether nitrile resin composition molding material according to 10., wherein the polyether nitrile is a polyether nitrile obtained by subjecting an aromatic dihydroxy compound (I) represented by general formula (2) and a dihalobenzonitrile compound (II) represented by general formula (3) to a desalting polycondensation reaction in the presence of a basic compound with the dihalobenzonitrile compound (II) being present at a molar ratio in a range of more than 1 relative to the aromatic dihydroxy compound (I).

[Chem. 8]

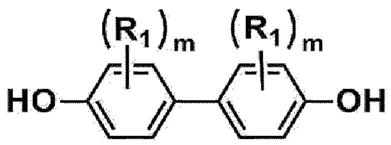

(2)

(In the formula, $R_1$ and m are as defined in general formula (1).)

[Chem. 9]

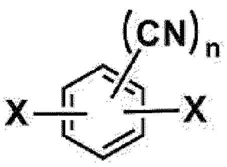

(3)

(In the formula, X represents a halogen atom, and n is as defined in general formula (1).)

12. The polyether nitrile resin composition molding material according to any one of 8. to 11., wherein the molding is performed under exclusion of oxygen or in an inert atmosphere.

13. A method for producing a polyether nitrile molding material, the method including performing molding using a polyether nitrile that has a melt flow rate (MFR) of 1 g/10 min or more as measured at 390°C under a load of 5000 g in accordance with ISO 1133 after being heated in air at 400°C for 10 minutes.

14. The method for producing a polyether nitrile molding material according to 13., wherein the polyether nitrile is a polyether nitrile having no hydroxy groups.

15. The method for producing a polyether nitrile molding material according to 14., wherein the polyether nitrile is a polyether nitrile having a repeating unit represented by general formula (1).

[Chem. 10]

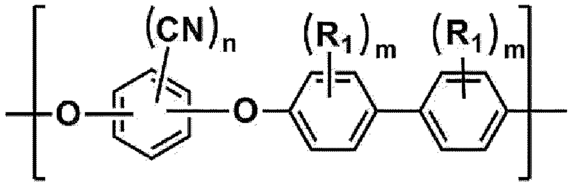

(1)

(In the formula, each $R_1$ independently represents a linear or branched alkyl group having 1 to 6 carbon atoms, a cyclic alkyl group having 5 or 6 carbon atoms, or a phenyl group, each m independently represents an integer of 0 to 4, and n represents an integer of 1 to 4.)

16. The method for producing a polyether nitrile molding material according to 15., wherein the polyether nitrile having a repeating unit represented by general formula (1) is a repeating unit represented by chemical formula (1-1).

[Chem. 11]

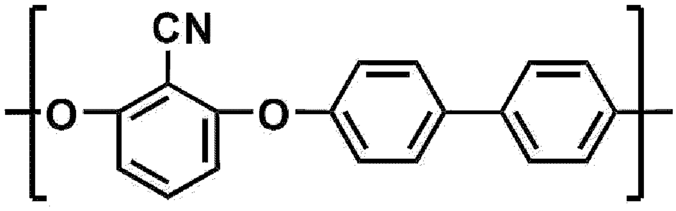

(1-1)

17. The method for producing a polyether nitrile molding material according to 15., wherein the polyether nitrile is a polyether nitrile obtained by subjecting an aromatic dihydroxy compound (I) represented by general formula (2) and a dihalobenzonitrile compound (II) represented by general formula (3) to a desalting polycondensation reaction in the presence of a basic compound with the dihalobenzonitrile compound (II) being present at a molar ratio in a range of more than 1 relative to the aromatic dihydroxy compound (I).

[Chem. 12]

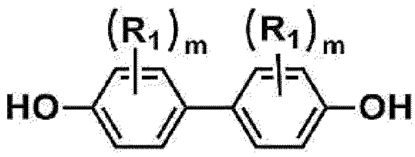

(2)

(In the formula, $R_1$ and m are as defined in general formula (1).)

[Chem. 13]

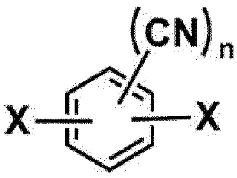

(3)

(In the formula, X represents a halogen atom, and n is as defined in general formula (1).)

18. The method for producing a polyether nitrile molding material according to 17., wherein at least 4,4'-biphenol is used as the aromatic dihydroxy compound (I), and at least 2,6-dichlorobenzonitrile is used as the dihalobenzonitrile compound (II).

19. The method for producing a polyether nitrile molding material according to any one of 13. to 18., wherein the molding is performed under exclusion of oxygen or in an inert atmosphere.

20. A method for producing a polyether nitrile resin composition molding material, the method including performing molding using a polyether nitrile resin composition containing a polyether nitrile that has a melt flow rate (MFR) of 1 g/10 min or more as measured at 390°C under a load of 5000 g in accordance with ISO 1133 after being heated in air at 400°C for 10 minutes and at least one selected from the group consisting of (A) to (C): a thermoplastic resin material (A), an additive (B), and a filler (C).
21. The method for producing a polyether nitrile resin composition molding material according to 20., wherein the polyether nitrile is a polyether nitrile having no hydroxy groups.
22. The method for producing a polyether nitrile resin composition molding material according to 21., wherein the polyether nitrile is a polyether nitrile having a repeating unit represented by general formula (1).

[Chem. 14]

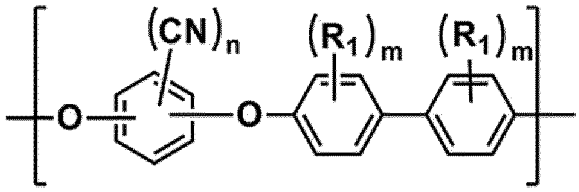
(1)

(In the formula, each $R_1$ independently represents a linear or branched alkyl group having 1 to 6 carbon atoms, a cyclic alkyl group having 5 or 6 carbon atoms, or a phenyl group, each m independently represents an integer of 0 to 4, and n represents an integer of 1 to 4.)
23. The method for producing a polyether nitrile resin composition molding material according to 22., wherein the polyether nitrile is a polyether nitrile obtained by subjecting an aromatic dihydroxy compound (I) represented by general formula (2) and a dihalobenzonitrile compound (II) represented by general formula (3) to a desalting polycondensation reaction in the presence of a basic compound with the dihalobenzonitrile compound (II) being present at a molar ratio in a range of more than 1 relative to the aromatic dihydroxy compound (I).

[Chem. 15]

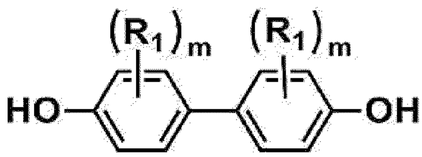
(2)

(In the formula, $R_1$ and m are as defined in general formula (1).)

[Chem. 16]

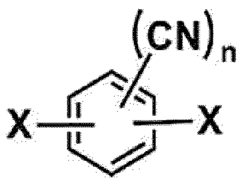
(3)

(In the formula, X represents a halogen atom, and n is as defined in general formula (1).)
24. The method for producing a polyether nitrile resin composition molding material according to any one of 20. to 23., wherein the molding is performed under exclusion of oxygen or in an inert atmosphere.

Advantageous Effects of Invention

The polyether nitrile molding material according to the present invention and the polyether nitrile resin composition molding material according to the present invention are extremely useful because they exhibit high flowability when heated and thus enables stable production of heat-molded articles excellent in high heat resistance, surface

smoothness, dimensional stability, etc. and having improved usage quality.

The method for producing a polyether nitrile molding material according to the present invention and the method for producing a polyether nitrile resin composition molding material according to the present invention are extremely useful because performing molding using a particular polyether nitrile can provide a polyether nitrile molding material and a polyether nitrile resin composition molding material that exhibit high flowability when heated.

Furthermore, performing molding under exclusion of oxygen or in an inert atmosphere can provide a polyether nitrile molding material and a polyether nitrile resin composition molding material that have higher flowability during molding.

Brief Description of Drawings

[Fig. 1] Fig. 1 shows an infrared absorption spectrum of a polyether nitrile obtained in Synthesis Example 1.

[Fig. 2] Fig. 2 shows an infrared absorption spectrum of a polyether nitrile obtained in Synthesis Example 2.

Description of Embodiments

A polyether nitrile molding material according to the present invention is obtained by molding a polyether nitrile that has a melt flow rate (MFR) of 1 g/10 min or more as measured at 390°C under a load of 5000 g in accordance with ISO 1133 after being heated in air at 400°C for 10 minutes, and it is preferable to use a polyether nitrile obtained by subjecting an aromatic dihydroxy compound (I) and a dihalobenzonitrile compound (II) to a desalting polycondensation reaction in the presence of a basic compound.

In the present invention, the term "molding material" refers to a substance formed into a shape of, for example, pellets or chips by heating in order to produce a molded article.

Such a polyether nitrile will be described below.

<Aromatic dihydroxy compound (I)>

The aromatic dihydroxy compound (I) in the present invention includes all aromatic compounds having two hydroxy groups. Among them, a compound represented by general formula (2) is preferred.

[Chem. 17]

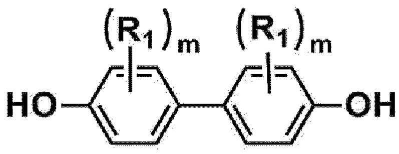

(2)

(In the formula, $R_1$ and m are as defined in general formula (1).)

Each $R_1$ in general formula (2) independently represents a linear or branched alkyl group having 1 to 6 carbon atoms, a cyclic alkyl group having 5 or 6 carbon atoms, or a phenyl group. In particular, $R_1$ is preferably a linear or branched alkyl group having 1 to 4 carbon atoms, a cyclic alkyl group having 5 or 6 carbon atoms, or a phenyl group, more preferably a linear or branched alkyl group having 1 to 4 carbon atoms or a phenyl group, particularly preferably an alkyl group having one carbon atom, that is, a methyl group.

Each m in general formula (2) independently represents an integer of 0 to 4. In particular, m is preferably 0, 1, or 2, more preferably 0 or 1, particularly preferably 0. When m is 1 or 2, a structural configuration in which $R_1$ is bonded to the ortho position with respect to the oxygen atom is preferred.

Specific examples of the compound represented by general formula (2) include 4,4'-biphenol, 3,3'-biphenol, 4,4'-dihydroxy-3,3'-dimethylbiphenyl, 4,4'-dihydroxy-3,3',5,5'-tetramethylbiphenyl, and 4,4'-dihydroxy-2,2',3,3',5,5'-hexamethylbiphenyl. Of these, 4,4'-biphenol, 4,4'-dihydroxy-3,3'-dimethylbiphenyl, 4,4'-dihydroxy-3,3',5,5'-tetramethylbiphenyl, and 4,4'-dihydroxy-2,2',3,3',5,5'-hexamethylbiphenyl are preferred, 4,4'-biphenol, 4,4'-dihydroxy-3,3'-dimethylbiphenyl, and 4,4'-dihydroxy-3,3',5,5'-tetramethylbiphenyl are more preferred, and 4,4'-biphenol is particularly preferred.

As the aromatic dihydroxy compound (I) in the present invention, only one compound corresponding thereto may be used, or two or more multiple compounds may be used. It is preferable to use only one.

<Dihalobenzonitrile compound (II)>

The dihalobenzonitrile compound (II) in the present invention includes all benzonitrile compounds having two halogen groups. Among them, a compound represented by general formula (3) is preferred.

[Chem. 18]

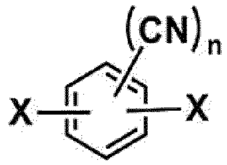

(3)

(In the formula, X represents a halogen atom, and n is as defined in general formula (1).)

Each X in general formula (3) independently represents a halogen atom, preferably independently represents a chlorine atom, a bromine atom, or an iodine atom, more preferably independently represents a chlorine atom or a bromine atom, particularly preferably represents a chlorine atom.

In general formula (3), n represents an integer of 1 to 4. In particular, n is preferably 1, 2, or 3, more preferably 1 or 2, particularly preferably 1. When n is 1, a structural configuration in which halogen atoms are bonded to both the ortho positions with respect to the cyano group is preferred.

Specific examples of the dihalobenzonitrile compound (II) in the present invention include 2,6-difluorobenzonitrile, 2,5-difluorobenzonitrile, 2,4-difluorobenzonitrile, 2,6-dichlorobenzonitrile, 2,5-dichlorobenzonitrile, 2,4-dichlorobenzonitrile, 2,6-dibromobenzonitrile, 2,5-dibromobenzonitrile, 2,4-dibromobenzonitrile, and 1,4-dichloro-2,5-dicyanobenzene. The dihalobenzonitrile compound (II) may also be a reactive derivative thereof. Of these, 2,6-difluorobenzonitrile and 2,6-dichlorobenzonitrile are suitable for use from the viewpoint of, for example, reactivity and economic efficiency. The compound represented by general formula (3) may be a combination of two or more of these compounds.

Examples of the reactive derivative include, in the case of structures derived from 2,6-dihalobenzonitrile, compounds that can react with aromatic dihydroxy compounds as represented by the following general formulae, and these mean compounds derived from the reactions between two 2,6-dihalobenzonitriles and between 2,6-dihalobenzonitrile and an aromatic dihydroxy compound.

[Chem. 19]

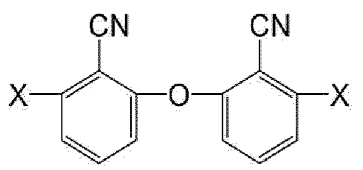

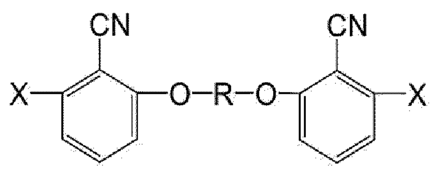

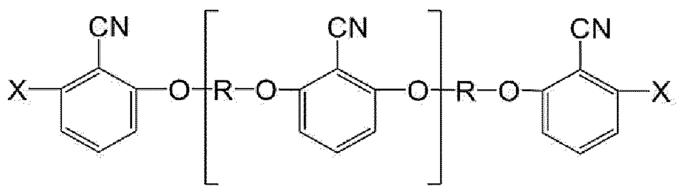

(In the formulae, R is as defined in general formula (2), and X is as defined in general formula (3).)

<Amount of raw material used>

In the desalting polycondensation reaction, the dihalobenzonitrile compound (II) is used typically at a molar ratio in the range of 0.8 to 1.2 relative to the aromatic dihydroxy compound (I), but to provide a polyether nitrile used for the molding material according to the present invention, the polyether nitrile having a melt flow rate (MFR) of 1 g/10 min or more as measured at 390°C under a load of 5000 g in accordance with ISO 1133 after being heated in air at 400°C for 10 minutes, the absence of hydroxy groups at polymer ends is effective; thus, the molar ratio of the dihalobenzonitrile compound (II) to

the aromatic dihydroxy compound (I) is preferably in the range of more than 1.

In particular, the dihalobenzonitrile compound (II) is preferably used in the range of 1.001 to 1.1, more preferably used in the range of 1.003 to 1.05.

From the viewpoint of increasing the polymerization rate of the polycondensation reaction, the dihalobenzonitrile compound (II) is particularly preferably used in the range of 1.005 to 1.03.

Even when the dihalobenzonitrile compound (II) is used at a molar ratio in the range of 1 or less relative to the aromatic dihydroxy compound (I), hydroxy ends can be eliminated using an activated aromatic monohalide such as a monohalobenzonitrile, a monohalodiphenyl sulfone, or a benzyl halide or an aliphatic halide such as an alkyl halide, which will be described later, and the polyether nitrile used for the molding material according to the present invention can be obtained.

<Basic compound>

The basic compound in the desalting polycondensation reaction may be any compound, whether an organic base or an inorganic base, as long as it promotes the desalting polycondensation reaction and does not affect the quality, but is preferably an inorganic base, especially preferably an alkali metal compound or an alkaline-earth metal compound, particularly preferably an alkali metal compound.

Organic bases include tetramethylammonium hydroxide, triethylamine, N,N-diisopropylethylamine, 1,1,3,3-tetramethylguanidine (TMG), N,N-dimethyl-4-aminopyridine (DMAP), 2,6-lutidine, pyridine, 1,8-diazabicyclo[5.4.0]-7-undecene (DBU), 1,5-diazabicyclo[4.3.0]-5-nonene (DBN), 7-methyl-1,5,7-triazabicyclo[4.4.0]dec-5-ene (MTBD), 1,5,7-triazabicyclo[4.4.0]dec-5-ene (TBD), 1,8-bis(dimethylaminonaphthalene) (DMAN), 1,4-diazabicyclo[2.2.2]octane (DABCO), tert-butylimino-tri(pyrrolidino)phosphorane, tert-butylimino-tris(dimethylamino)phosphorane, 2-tert-butylimino-2-diethylamino-1,3-dimethylperhydro-1,3,2-diazaphosphorine, tert-octylimino-tris(dimethylamino)phosphorane, phosphazene base $P_2$-Et, phosphazene base $P_2$-t-Bu, phosphazene base $P_3$-t-Bu, phosphazene base $P_4$-t-Bu, and phosphazene base $P_4$-t-Oct.

Among inorganic bases, examples of alkali metal compounds include alkali metals such as lithium, rubidium, cesium, potassium, and sodium; alkali metal hydrides such as lithium hydride, rubidium hydride, cesium hydride, potassium hydride, and sodium hydride; alkali metal hydroxides such as lithium hydroxide, rubidium hydroxide, cesium hydroxide, potassium hydroxide, and sodium hydroxide; alkali metal carbonates such as lithium carbonate, rubidium carbonate, cesium carbonate, potassium carbonate, and sodium carbonate; and alkali metal hydrogen carbonates such as lithium hydrogen carbonate, rubidium hydrogen carbonate, cesium hydrogen carbonate, potassium hydrogen carbonate, and sodium hydrogen carbonate. These can be used alone or in combination of two or more.

By using such an alkali metal compound having a specific surface area of 0.3 $m^2/g$ or more, the desalting polycondensation reaction can be performed with high efficiency. The specific surface area of the alkali metal compound catalyst is preferably 0.8 $m^2/g$ or more, more preferably 1.2 $m^2/g$ or more. By using an alkali metal compound having a larger specific surface area, the chance of contact between the catalyst and the reaction raw materials is further increased, and the desalting polycondensation reaction can be performed with higher efficiency. When the specific surface area is smaller than 0.3 $m^2/g$, the desalting polycondensation reaction cannot be performed with sufficiently high efficiency unless the amount of catalyst is increased, but an increase in the amount of catalyst is not preferred because the polycondensate quality is affected.

From the above, the basic compound in the desalting polycondensation reaction is preferably an alkali metal carbonate such as lithium carbonate, rubidium carbonate, cesium carbonate, potassium carbonate, or sodium carbonate, more preferably lithium carbonate, potassium carbonate, or sodium carbonate, particularly preferably potassium carbonate or sodium carbonate having a specific surface area of 0.3 $m^2/g$ or more from the viewpoint of availability.

In the desalting polycondensation reaction, the amount of the basic compound used, for example, in the case of an alkali metal compound, is usually preferably at least 2 times that of the dihydroxy compound (I) on a molar basis in terms of alkali metal ions contained, but side reactions, such as cleavage of an ether bond formed, will occur if a large excess of the alkali metal compound is used. Thus, the amount used is preferably in the range of 2 to 4 times, more preferably in the range of 2 to 2.4 times, particularly preferably in the range of 2 to 2.2 times, on a molar basis.

Examples of the method of producing a polyether nitrile according to the present invention include, but are not limited to, a method in which the aromatic dihydroxy compound (I) and the basic compound are allowed to react in a solvent to obtain a basic compound salt of the aromatic dihydroxy compound (I), which is then subjected to a desalting polycondensation reaction with the dihalobenzonitrile compound (II), and a method in which a desalting polycondensation reaction of a basic compound salt of the aromatic dihydroxy compound (I) with the dihalobenzonitrile compound (II) is allowed to proceed in a state where the aromatic dihydroxy compound (I), the dihalobenzonitrile compound (II), and the basic compound coexist.

As an example of the method of producing a polyether nitrile according to the present invention, when the compound represented by general formula (2) as the aromatic dihydroxy compound (I) and the compound represented by

general formula (3) as the dihalobenzonitrile compound (II) are subjected to a polycondensation reaction using potassium carbonate as the basic compound, a polyether nitrile having a repeating unit represented by general formula (1) is obtained. The reaction formula in this case is shown below.

[Chem. 20]

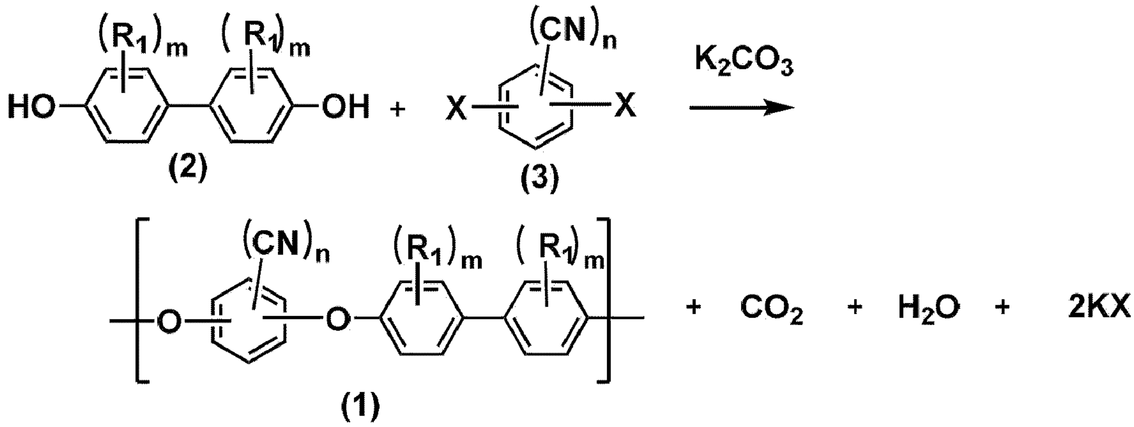


(In the formula, $R_1$, X, m, and n are as defined in general formulae (1) to (3))

In producing the polyether nitrile, the polycondensation reaction may be carried out through divided steps of an oligomer formation step (A) and a polymerization step (B), in which the reaction is carried out in different ways, or through a single undivided step.

The oligomer formation step (A) is a step of subjecting the aromatic dihydroxy compound (I) and the dihalobenzonitrile compound (II) to a polycondensation reaction in the presence of a basic compound to form an oligomer. The oligomer in this case is not particularly limited, and a polycondensation reaction product having a polymer reduced viscosity of about less than 1 is referred to as an oligomer.

The polymer formation step (B) is a step of further subjecting the oligomer obtained in the step (A) to the polycondensation reaction to form a polymer. As the oligomer at this time, the polycondensation reaction solution in the step (A) can be used as it is, or an oligomer isolated by additionally performing the step (A) can also be used.

The polycondensation reaction involves an operation to remove water generated during a desalting reaction out of the system. The method of the operation is, for example, a method in which the reaction is run at a temperature at which the desalting reaction proceeds in the presence of a solvent that forms an azeotrope with water, and during the reaction, water is distilled off the reaction mixture by means of the solvent that forms an azeotrope with water. This allows the reaction to be maintained in a substantially anhydrous state. The temperature at which the desalting reaction starts is typically around 130°C, while depending on the raw materials. For example, in the case of using 4,4'-biphenol as the aromatic dihydroxy compound (I), 2,6-dichlorobenzonitrile as the dihalobenzonitrile compound (II), potassium carbonate, sulfolane (boiling point, 285°C) as an aprotic solvent, and toluene as the solvent that forms an azeotrope with water, the reaction temperature is preferably in the range of 130°C to 170°C. When the reaction is continued, it is preferable to maintain the reaction system in a substantially anhydrous state while removing water produced as a result of the reaction. When the water produced is not sufficiently removed, the water may react with the dihalobenzonitrile compound (II) to form a by-product having a phenol skeleton, resulting in the production of a low-molecular-weight product alone. That is, to obtain a high-molecular-weight polyether nitrile, the reaction system preferably contains substantially no water, preferably less than 0.5 wt% of water.

The polycondensation reaction is carried out under atmospheric pressure in an inert atmosphere such as a nitrogen atmosphere, but may also be carried out under increased pressure or reduced pressure.

<Solvent>

In the polycondensation reaction, a reaction solvent can be used, and it is preferable to use an aprotic solvent as the reaction solvent.

Specific examples of the aprotic solvent include N,N-dimethylacetamide, N,N-dimethylformamide, N-methyl-2-pyrolidone, 1,3-dimethyl-2-imidazolidinone, γ-butyrolactone, sulfolane, dimethyl sulfoxide, diethyl sulfoxide, dimethyl sulfone, diethyl sulfone, diisopropyl sulfone, diphenyl sulfone, diphenyl ether, benzophenone, dialkoxybenzenes (the number of carbon atoms in the alkoxy group, 1 to 4), and trialkoxybenzenes (the number of carbon atoms in the alkoxy group, 1 to 4). Among these solvents, high-permittivity polar organic solvents such as N-methyl-2-pyrolidone, N,N-dimethylacetamide, sulfolane, diphenyl sulfone, and dimethyl sulfoxide are particularly suitable for use. These can be used alone or in combination of two or more.

Furthermore, a nitrogen-containing solvent may be used, and specific examples include N-alkylpyrrolidinones such as dimethylacetamide, dimethylformamide, and N-methylpyrrolidinone. Other solvents such as benzophenone and tetra-substituted urea may also be used.

The amount of dipolar aprotic solvent used is not particularly limited as long as the raw materials are homogeneously dissolved and the alkali metal salt is dispersed well by stirring. Any amount that maximizes the volume efficiency of a reaction vessel may be chosen according to the raw materials used and the target polymer. Typically, the amount is chosen in the range of 0.5 to 20 times the total weight of the raw materials and the alkali metal salt.

Specific examples of the solvent that forms an azeotrope with water include aromatic hydrocarbons such as benzene, toluene, xylene, hexane, cyclohexane, octane, chlorobenzene, dioxane, tetrahydrofuran, anisole, and phenetole. These can be used alone or in combination of two or more.

When the solvent that forms an azeotrope with water is used, it is preferable to use the solvent that forms an azeotrope with water in an amount in the range of 1 to 100 parts by weight relative to 100 parts of the aprotic solvent, more preferably in the range of 1 to 10 parts by weight, still more preferably in the range of 2 to 5 parts by weight, from the viewpoint of volume efficiency and solvent recovery.

<Reaction temperature>

The reaction temperature in the polycondensation reaction is in the range of 140°C to 300°C. Within this range, the reaction may be continued at a constant temperature, or the temperature may be increased as the polycondensation reaction proceeds.

When the polycondensation reaction is carried out through divided steps of the oligomer formation step (A) and the polymerization step (B), the reaction temperature in the oligomer formation step (A) is preferably in the range of 140°C to 200°C, more preferably in the range of 150°C to 170°C, still more preferably in the range of 155°C to 165°C, and the reaction temperature in the polymerization step (B) is preferably in the range of 200°C to 300°C, more preferably in the range of 210°C to 270°C, still more preferably in the range of 210°C to 240°C, particularly preferably in the range 215°C to 230°C.

For example, in the case of using 4,4'-biphenol as the aromatic dihydroxy compound (I), 2,6-dichlorobenzonitrile as the dihalobenzonitrile compound (II), potassium carbonate, sulfolane (boiling point, 285°C) as an aprotic solvent, and toluene as the solvent that forms an azeotrope with water, the reaction temperature is preferably in the range of 190°C to 280°C.

The reaction time of the polycondensation reaction varies depending on the reaction conditions and the raw materials used, but is typically 3 to 20 hours.

When the polycondensation reaction is carried out through divided steps of the oligomer formation step (A) and the polymerization step (B), the reaction time of the step (A), while the reaction is preferably continued until carbon dioxide and water are not substantially produced, is not particularly limited. The reaction time is typically 1 to 6 hours, preferably 1 to 4 hours. The reaction time of the step (B) varies depending on the reaction conditions and the raw materials used, but is 1 to 8 hours, preferably 1 to 7 hours, more preferably 1 to 6 hours.

For the molecular weight of the target polyether nitrile, the progress of the reaction can be controlled using a monofunctional phenol chain stopper such as p-phenylphenol, phenol, t-butylphenol, or others or a monofunctional halogen chain stopper such as a monohalobenzonitrile such as monochlorobenzonitrile or monofluorobenzonitrile or a monohalodiphenyl sulfone.

After the desired molecular weight of the target polyether nitrile has been achieved, treating the polymer with an activated aromatic halide such as a methyl halide or a benzyl halide or an aliphatic halide is preferred because any potentially remaining hydroxy end groups of the polyether nitrile are converted into ether groups which stabilize the polymer, so that the polymer can be provided with good melt and oxidation stability.

<Treatment after reaction>

After completion of the polycondensation reaction, the polycondensation reaction product is taken out from the reaction vessel, solidified by cooling, then pulverized, and subjected to subsequent cleaning, drying, and molding material (pellet or chip) production steps; alternatively, the polycondensation reaction product taken out from the reaction vessel may be directly put into a cleaning tank in the cleaning step, or a solvent for use in the cleaning step described below may be poured into the reaction vessel after completion of the polycondensation reaction to transfer the product in slurry form or wax form to the cleaning step.

The cleaning step is a step of performing cleaning to remove a salt, a reaction solvent, and the like contained in the polycondensation reaction product obtained by the polycondensation reaction.

In this cleaning step, preferably, the reaction solvent in the polycondensation reaction product is subjected to extraction cleaning by a known method using a solvent such as an alcohol, a ketone, an aromatic hydrocarbon, an aliphatic hydrocarbon, or water, and then the salt resulting from the desalting reaction in the polycondensation reaction product is removed by cleaning with preferably water.

In a specific operation, the polycondensation reaction product in pulverized, slurry, or wax form is transferred to a container equipped with a stirrer, and an operation of stirring cleaning with a cleaning solvent and filtration is repeated until the contents of the reaction solvent and the salt fall below the desired levels.

As an apparatus, for example, a combination of a cleaning tank with a pressure filter or a centrifuge, or a multifunctional filtration system capable of performing cleaning, filtration, and drying by itself may be used.

Specific examples, excluding water, of solvents for extraction cleaning of the reaction solvent include alcohols such as methanol, ethanol, propyl alcohol, isopropyl alcohol, butyl alcohol, isobutyl alcohol, sec-butyl alcohol, t-butyl alcohol, n-amyl alcohol, isoamyl alcohol, t-amyl alcohol, n-hexyl alcohol, cyclohexanol, n-octyl alcohol, and capryl alcohol; ketones such as acetone, methyl ethyl ketone, methyl n-propyl ketone, diethyl ketone, 2-hexanone, 3-hexanone, methyl-t-butyl ketone, di-n-propyl ketone, diisopropyl ketone, diisobutyl ketone, di-n-amyl ketone, diacetyl, acetylacetone, cyclohexanone, and benzophenone; aliphatic hydrocarbons including saturated aliphatic hydrocarbons such as n-hexane, 2-methylheptane, 3-methylheptane, 2,2-dimethylbutane, 2,3-dimethylbutane, n-heptane, 2-methylhexane, 3-methylhexane, 2,2-dimethylpentane, 2,3-dimethylpentane, 2,4-dimethylpentane, 3,3-dimethylpentane, 3-ethylpentane, 2,2,3-trimethylbutane, and cyclohexane and unsaturated hydrocarbons such as 1-hexene, 1-heptene, 1-octene, and cyclohexene; and aromatic hydrocarbons such as benzene, toluene, o-xylene, m-xylene, p-xylene, ethylbenzene, n-propylbenzene, cumene, n-butylbenzene, t-butylbenzene, styrene, and allylbenzene.

Of these, for example, methanol, ethanol, acetone, methyl ethyl ketone, xylene, and toluene are preferred, and acetone and methanol are particularly preferred in terms of operability and ease of distillation recovery of the reaction solvent after cleaning.

For the cleaning of the alkali metal salt such as potassium chloride resulting from the desalting polycondensation reaction, water is preferably used, or acidic water containing oxalic acid or acetic acid at a low concentration may be used.

For the conditions of this cleaning step, the amount of cleaning solvent used, the number of times of cleaning, and the cleaning temperature may be appropriately selected according to the amounts of residual reaction solvent and residual alkali metal salt desired to be removed.

The drying step is a step of drying the polycondensation reaction product obtained by the cleaning step.

The water-containing polycondensation reaction product that has been through the cleaning is dried by a known method. As a dryer, a known apparatus such as an evaporator, a shelf-type oven, or a tumbler can be used.

The target water content is typically 0.5 wt% or less, preferably 0.4 wt% or less, more preferably 0.3 wt% or less.

This drying step may be performed under any conditions as long as the temperature is equal to or lower than the melting point of the polycondensation reaction product and water can be removed. To avoid contact with air as much as possible, the drying step is preferably performed under reduced pressure in an inert gas (e.g., nitrogen or argon) atmosphere or under a stream of inert gas.

The polymer that has been through the drying step is basically a powder.

The molecular weight (weight-average molecular weight (Mw)) of the polyether nitrile according to the present invention produced by the above-described method depends on the intended use and is not particularly limited, and the molecular weight determined by GPC is 40,000 to 1,000,000, preferably 50,000 to 500,000, more preferably 60,000 to 300,000. If the molecular weight of the polymer obtained is less than 40,000, the polymer has poor mechanical strength, and if it is more than 1,000,000, the polymer is difficult to mold, which are not preferred.

The polyether nitrile according to the present invention has a melt flow rate (MFR), as measured at 390°C under a load of 5000 g in accordance with ISO 1133 after being heated in air at 400°C for 10 minutes, of 1 g/10 min or more, preferably 2 g/10 min or more, more preferably 3 g/10 min or more, still more preferably 5 g/10 min or more, particularly preferably 7 g/10 min or more. The upper limit of the MFR is not limited, and is typically 90 g/10 min or less.

The polyether nitrile according to the present invention preferably has no hydroxy groups. The absence of hydroxy groups in the polyether nitrile can be confirmed if a peak around 3500 to 3200 $cm^{-1}$ indicating O-H stretching vibration of hydroxy groups is not observed when the polyether nitrile is analyzed by infrared spectroscopy. The peak indicating O-H stretching vibration of hydroxy groups is smaller than other peaks because the end hydroxy groups of the polyether nitrile are chemical structures much fewer than the large number of main structures of repeating units of the polyether nitrile, but can be observed.

To have higher flowability, the polyether nitrile molding material according to the present invention is preferably obtained by molding the polyether nitrile obtained as described above under exclusion of oxygen or in an inert atmosphere.

In the present invention, "under exclusion of oxygen" means a condition where oxygen does not flow into a molding apparatus, and it is not intended to remove oxygen slightly contained in the apparatus and in the polyether nitrile used. For example, by setting the molding condition to a pressurized condition, the condition where oxygen does not flow into a molding apparatus, that is, "under exclusion of oxygen" in the present invention, can be achieved.

The molding apparatus may be brought to be in an inert atmosphere by using an inert gas such as nitrogen gas or argon gas.

A method for producing a polyether nitrile molding material according to the present invention includes performing molding using a polyether nitrile that has a melt flow rate (MFR) of 1 g/10 min or more as measured at 390°C under a load of 5000 g in accordance with ISO 1133 after being heated in air at 400°C for 10 minutes. Performing the molding under exclusion of oxygen or in an inert atmosphere is preferred because a polyether nitrile molding material having higher flowability is provided.

A polyether nitrile resin composition molding material according to the present invention is obtained by molding a polyether nitrile resin composition containing a polyether nitrile that has a melt flow rate (MFR) of 1 g/10 min or more as measured at 390°C under a load of 5000 g in accordance with ISO 1133 after being heated in air at 400°C for 10 minutes and at least one selected from the group consisting of (A) to (C): a thermoplastic resin material (A), an additive (B), and a filler (C).

In the present invention, the polyether nitrile resin composition molding material means a substance formed of the polyether nitrile resin composition and formed into a shape of, for example, pellets or chips.

To have higher flowability, the polyether nitrile resin composition molding material is preferably obtained by performing molding under exclusion of oxygen or in an inert atmosphere.

Specific examples of the thermoplastic resin material (A) contained in the polyether nitrile resin composition include high-density polyethylene, medium-density polyethylene, isotactic polypropylene, acrylonitrile-butadiene-styrene (ABS) resin, acrylonitrile-styrene (AS) resin, acrylic resin, fluorocarbon resin (e.g., polytetrafluoroethylene), polyester, polycarbonate, polyarylate, aliphatic polyamide, aromatic polyamide, polysulfone, polyether sulfone, polyether ketone, polyether ether ketone, polyether nitrile, polyphenylene sulfide, polyetherimide, polyamide-imide, polyesterimide, and modified polyphenylene oxide.

Specific examples of the additive (B) contained in the polyether nitrile resin composition include hydrophilic agents, antioxidants, secondary antioxidants, flame retardants, flame retardant aids, plasticizers, lubricants, release agents, antifogging agents, weathering stabilizers, light stabilizers, hydrolysis resistance improvers, flowability improvers, UV absorbers, antistatic agents, metal deactivators, near-infrared absorbers, and colorants (dyes and pigments).

Specific examples of the filler (C) contained in the polyether nitrile resin composition include various metal powders, powders of inorganic acid metal salts (e.g., calcium carbonate, zinc borate, calcium borate, zinc stannate, calcium sulfate, and barium sulfate), powders of metal oxides (e.g., magnesium oxide, iron oxide, titanium oxide, zinc oxide, and alumina), powders of metal hydroxides (e.g., aluminum hydroxide, magnesium hydroxide, zirconium hydroxide, and alumina hydrate (boehmite)), powders of metal sulfides (e.g., zinc sulfide, molybdenum sulfide, and tungsten sulfide), silver nanowires, carbon fibers, glass fibers, carbon nanotubes, graphene, and ceramic materials such as silica.

In the polyether nitrile resin composition in the present invention, the amount of (A) to (C), which may be contained in an appropriate amount depending on the intended use, is preferably 90 wt% or less relative to the total weight of the polyether nitrile resin composition.

As a molding apparatus used to produce a molding material such as pellets or chips, a melt-kneading apparatus such as a single-screw, twin-screw, or multi-screw extruder, a Banbury mixer, a kneader, or a roller is typically used, but a molding material such as pellets or chips may be produced by cutting a sheet prepared using a compression molding machine as used in Examples described later.

An industrially preferred process in producing the polyether nitrile molding material and the polyether nitrile resin composition molding material is as follows. The polyether nitrile powder obtained through polycondensation, pulverization, cleaning, and vacuum drying is directly transferred to, for example, a silo sealed with nitrogen gas or the like and stored there without being exposed to the outside air. When formed into a shape of, for example, pellets or chips, the powder is transferred to an extruder together with nitrogen gas through a pipe without any treatment.

In producing the polyether nitrile resin composition molding material, methods such as 1) preliminarily mixing the polyether nitrile powder or preformed polyether nitrile molding material and other components ((A) to (C) above) and then transferring the mixture to an extruder, 2) preliminarily preparing molding materials of a plurality of polyether nitrile resin compositions having different compositions using the polyether nitrile powder or preformed polyether nitrile molding material and other components ((A) to (C) above), mixing the molding materials in predetermined amounts so as to give a desired content ratio, and then transferring the mixture to an extruder, and 3) directly feeding the polyether nitrile powder or preformed polyether nitrile molding material and other components ((A) to (C) above) into an extruder can be employed, and these methods are preferably performed in an inert atmosphere. The polyether nitrile molding material used here may be the polyether nitrile molding material according to the present invention, which is preferably used. The polyether nitrile resin composition molding material used here may be a polyether nitrile resin composition molding material obtained by the production method according to the present invention, which is preferably used. That is, a material obtained by molding a mixture containing the polyether nitrile molding material according to the present invention and at least one selected from the group consisting of (A) to (C): the thermoplastic resin material (A), the additive (B), and the filler (C) is also an embodiment of the polyether nitrile resin composition molding material according to the present invention. Melt-kneading

is then performed in no contact with oxygen (air), and a molten polymer from a die is pelletized by cutting in water or water-cooled cutting of a strand.

For temperature conditions as the conditions of the process of producing these molding materials (pellets or chips), the operation described above is performed at a temperature sufficient to melt the polymer. To minimize deterioration due to the influence of oxygen during molding, the temperature is preferably as low as possible. The upper limit is typically 500°C or lower, and the operation is particularly preferably performed in a temperature range higher than the melting point of the polymer and not higher than a temperature 40°C higher than the melting point.

Specifically, for example, the polyether nitrile powder used in Examples, which is obtained using biphenol and 2,6-dichlorobenzonitrile, has a melting point of 364°C and thus is molded at a temperature higher than 364°C, and the upper limit of the temperature is preferably 450°C or lower, more preferably 430°C or lower, still more preferably 415°C or lower, particularly preferably 405°C or lower.

The polyether nitrile molding material according to the present invention that has been through the above molding material (pellet or chip) production step has a melt flow rate (MFR) in the range of 1 g/10 min or more and 90 g/10 min or less as measured at 390°C under a load of 5000 g in accordance with ISO 1133. The MFR is preferably in the range of 3 g/10 min or more and 90 g/10 min or less, more preferably in the range of 5 g/10 min or more and 90 g/10 min or less, still more preferably in the range of 10 g/10 min or more and 90 g/10 min or less, particularly preferably in the range of 13 g/10 min or more and 90 g/10 min or less. The polyether nitrile molding material exhibits high and less variable flowability when heated, and thus can provide a stable heat-molded article excellent in high heat resistance, surface smoothness, dimensional stability, etc. and having improved usage quality.

In the polyether nitrile molding material according to the present invention, the polyether nitrile having a repeating unit represented by general formula (1) is particularly preferably a polyether nitrile having a repeating unit represented by chemical formula (1-1).

[Chem. 21]

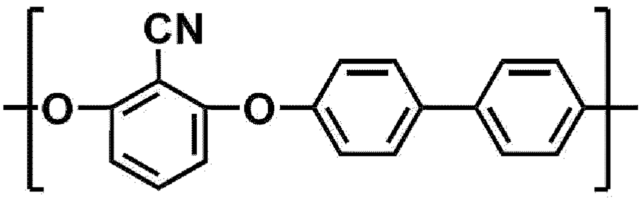

(1-1)

The polyether nitrile having a repeating unit represented by chemical formula (1-1) is a polyether nitrile obtained using at least 4,4'-biphenol as the aromatic dihydroxy compound (I) and using 2,6-dichlorobenzonitrile as the dihalobenzonitrile compound (II), and is preferably obtained by subjecting them to a desalting condensation reaction in the presence of a basic compound with the dihalobenzonitrile compound (II) being present at a molar ratio in the range of more than 1 relative to the aromatic dihydroxy compound (I). Two or more multiple aromatic dihydroxy compounds (I) including a compound other than 4,4'-biphenol and two or more multiple dihalobenzonitrile compounds (II) including a compound other than 2,6-dichlorobenzonitrile may be used so that the polyether nitrile has a repeating unit other than the repeating unit represented by chemical formula (1-1). The polyether nitrile preferably has only the repeating unit represented by chemical formula (1-1) obtained using only 4,4'-biphenol and 2,6-dichlorobenzonitrile. The method of producing the polyether nitrile is the same as described above.

Preferred embodiments such as the melt flow rate (MFR) of the polyether nitrile measured at 390°C under a load of 5000 g in accordance with ISO 1133 after being heated in air at 400°C for 10 minutes, the molecular weight (weight-average molecular weight (Mw)) of the polyether nitrile, the absence of hydroxy groups in the polyether nitrile, and the melt flow rate (MFR) of the polyether nitrile molding material measured at 390°C under a load of 5000 g in accordance with ISO 1133 are the same as described above.

That is, the melt flow rate (MFR) of the polyether nitrile measured at 390°C under a load of 5000 g in accordance with ISO 1133 after being heated in air at 400°C for 10 minutes is 1 g/10 min or more, preferably 2 g/10 min or more, more preferably 3 g/10 min or more, still more preferably 5 g/10 min or more, particularly preferably 7 g/10 min or more. The upper limit of the MFR is not limited, and is typically 90 g/10 min or less.

The molecular weight (weight-average molecular weight (Mw)) of the polyether nitrile determined by GPC is 40,000 to 1,000,000, preferably 50,000 to 500,000, more preferably 60,000 to 300,000.

The melt flow rate (MFR) of the polyether nitrile molding material measured at 390°C under a load of 5000 g in accordance with ISO 1133 is in the range of 1 g/10 min or more and 90 g/10 min or less, preferably in the range of 3 g/10 min or more and 90 g/10 min or less, more preferably in the range of 5 g/10 min or more and 90 g/10 min or less, still more

preferably in the range of 10 g/10 min or more and 90 g/10 min or less, particularly preferably in the range of 13 g/10 min or more and 90 g/10 min or less.

Previously, the present inventors have ascertained that when a polyether nitrile is subjected to melt kneading or heat compression molding to be formed into a molding material such as pellets or chips, flowability greatly decreases.

The present inventors have considered that this great decrease in melt flowability is due to the fact that the polyether nitrile has a very high melting point and needs to be molded at a high temperature close to 400°C, which is thermally intolerable for commonly used engineering plastics.

In addition, as described above, the polyether nitrile produced by desalting polycondensation, due to its production process, can be obtained as a pure polymer only in the form of a fine powder having a large specific surface area or powder, and thus the present inventors have presumed that when the polyether nitrile is molded into pellets or chips, the influence of oxidation by oxygen, in addition to the high temperature close to 400°C, is very significant, and considered that the polyether nitrile molding material of the related art experiences a great decrease in flowability because a cross-linked structure is formed under the influence of oxidation by oxygen during molding at a high temperature close to 400°C.

Thus, to avoid the influence of oxidation during molding into a molding material such as pellets or chips, the present inventors have studied production under conditions where the influence of oxygen is eliminated under exclusion of air intrusion or in an inert gas atmosphere such as nitrogen, and found that a polyether nitrile molding material that exhibits high flowability can be obtained.

This time, the present inventors have elucidated the mechanism that when hydroxy groups are present at ends of a polyether nitrile, cross-linking due to intermolecular oxidative coupling is very likely to occur at high temperature in the presence of oxygen, resulting in a decrease in flowability. The present invention has revealed that by selecting a polyether nitrile, particularly with no hydroxy groups at ends, that maintains flowability with an MFR of 1 g/10 min or more even after heated in air at 400°C for 10 minutes and molding the polyether nitrile under exclusion of oxygen or in an inert atmosphere, a polyether nitrile molding material that exhibits even higher flowability during molding can be obtained.

The present invention has also revealed that by molding the polyether nitrile resin composition in the present invention under exclusion of oxygen or in an inert atmosphere, a polyether nitrile resin composition molding material that exhibits even higher flowability during molding can be obtained.

Molded articles and parts obtained using the polyether nitrile molding material according to the present invention and the polyether nitrile resin composition molding material obtained by the method of the present invention have heat resistance, chemical resistance, flame resistance, and high mechanical properties. The molded articles and parts can be used in, for example, electric and electronic applications such as personal computers and semiconductor parts, automotive applications such as gears, bearings, and housings around engines, or applications in the medical equipment and aerospace fields.

## EXAMPLES

The present invention will now be described more specifically with reference to Examples, but it should be noted that the present invention is not limited to these Examples.

Analysis methods in the present invention are as follows.

<Analysis method>

(1) Method of measuring reduced viscosity $\eta_{red}$ (dL/g)

A sample in an amount of 0.1 g was dissolved in about 5 g of parachlorophenol at 180°C, and the solution was transferred to a 10 mL measuring flask. The flask was made up to volume at 40°C. This was weighed out with a 5 mL whole pipette and put into an Ostwald tube (capillary tube, 0.75 mm). The Ostwald tube was allowed to stand in a constant-temperature bath at 40.0°C for 15 minutes, and a flow time T was measured to calculate the reduced viscosity $\eta_{red}$ (dL/g) of a polymer by the following formula.

[Calculation formula]

$$\eta_{red} = \{(T/T_0) - 1\}/C$$

C: solution concentration (g/dL), T: flow time of solution, $T_0$: flow time of solvent

(2) Thermal properties: melting point and glass transition temperature (Tg)

Using a differential scanning calorimeter (DSC-60, manufactured by Shimadzu Corporation), thermal properties of a sample were measured under the following conditions.

Conditions: sample, about 10 mg; nitrogen flow rate, 50 mL/min; temperature change range, 50°C to 450°C; temperature change rate, 10°C/min.

(3) Melt flow rate (MFR) measurement

In accordance with ISO 1133, a sample dried under vacuum at 120°C for 16 hours was measured using a NO.120-FWP MELT FLOW INDEX TESTER (manufactured by YASUDA SEIKI SEISAKUSHO, LTD.) at a temperature of 390°C under a load of 5000 g for a preheating time of 5 minutes.

(4) Measurement of MFR at 390°C under load of 5000 g in accordance with ISO 1133 after being heated in air at 400°C for 10 minutes

On a stainless-steel plate of 150 mm × 150 mm × 5 mm, a polyimide film was mounted, and a 20-mm-wide spacer having a space 1 mm thick, 90 mm long, and 40 mm wide was further placed. The spacer was filled with 5 g of a polyether nitrile. Furthermore, a polyimide film was put thereon, and another stainless-steel plate of 150 mm × 150 mm × 5 mm was placed thereon (hereinafter, the resulting assembly is referred to as a "molding die"). The "molding die" was quickly loaded on a lower platen of a press molding machine (MINI TEST PRESS MP-2FH manufactured by Toyo Seiki Co., Ltd.) preliminarily heated to 400°C such that the powder did not spill out. After the "molding die" was loaded, it was held in air at 400°C for 10 minutes without pressure, and then held at 400°C for an additional 5 minutes with pressure applied up to 10 MPa by moving down an upper platen.

Thereafter, the "molding die" was removed from the platens and rapidly cooled with an attached water-cooling cold press machine. After the cooling, a polyether nitrile sheet 1 mm thick, 90 mm long, and 40 mm wide was obtained from the removed "molding die".

This sheet was cut to prepare sample pieces about 5 mm square, thereby obtaining polyether nitrile pellets, and the MFR of the pellets was measured by the method of (3) above.

<Synthesis Example 1> (Synthesis of polyether nitrile)

In a four-necked 3-liter reaction vessel equipped with a mechanical stirrer, a thermometer, a dry nitrogen inlet, and a reflux condenser, 301.53 g (1.753 mol) of 2,6-dichlorobenzonitrile (hereinafter referred to as "DCBN"), 323.08 g (1.735 mol) of 4,4'-biphenol (hereinafter referred to as "BP") (DCBN/BP input molar ratio = 1.01), 251.79 g (1.822 mol) of anhydrous potassium carbonate, 60 g of toluene, and 1562 g of anhydrous sulfolane were loaded. This mixture was heated from room temperature under a stream of nitrogen, and with stirring at 250 rpm, the temperature was increased to 160°C with heating under reflux. At 130°C or higher, carbon dioxide evolved from the reaction of potassium carbonate and BP. After 3 hours at 160°C, the oligomerization reaction of DCBN and BP was completed, and the cooling water in the reflux condenser was then replaced with warm water to remove water and toluene through an outlet, whereby the temperature was raised to 220°C, where a polycondensation reaction was carried out for 1.5 hours.

After the polycondensation reaction, a polycondensation reaction product was taken out from the bottom of the reaction vessel and allowed to cool and solidify. After this solid product was pulverized with a Waring blender, this substance was washed with acetone and distilled water and dried in a vacuum oven at 120°C for 16 hours to obtain 470 g of a polyether nitrile in powder form (yield, 95%).

The polyether nitrile had a reduced viscosity $\eta_{red}$ of 2.13.

The polyether nitrile had a melting point of 364°C and a glass transition temperature (Tg) of 215°C.

The polyether nitrile was analyzed by infrared spectroscopy, and a peak around 3500 to 3200 $cm^{-1}$ indicating O-H stretching vibration of hydroxy groups was not observed, revealing that the polyether nitrile had no hydroxy groups. The infrared absorption spectrum is shown in Fig. 1.

The polyether nitrile had an MFR of 9.5 g/10 min as measured by the above analysis method at 390°C under a load of 5000 g in accordance with ISO 1133 after being heated in air at 400°C for 10 minutes.

<Synthesis Example 2> (Synthesis of polyether nitrile)

In a four-necked 3-liter reaction vessel equipped with a mechanical stirrer, a thermometer, a dry nitrogen inlet, and a reflux condenser, 298.45 g (1.735 mol) of DCBN, 323.08 g (1.735 mol) of BP (DCBN/BP input molar ratio = 1.000), 251.79 g (1.822 mol) of anhydrous potassium carbonate, 60 g of toluene, and 1562 g of anhydrous sulfolane were loaded.

This mixture was heated from room temperature under a stream of nitrogen, and with stirring at 250 rpm, the temperature was increased to 160°C with heating under reflux. At 130°C or higher, carbon dioxide evolved from the reaction of potassium carbonate and BP. After 3 hours at 160°C, the oligomerization reaction of DCBN and BP was completed, and the cooling water in the reflux condenser was then replaced with warm water to remove water and toluene through an outlet, whereby the temperature was raised to 220°C, where a polycondensation reaction was carried out for 3 hours.

After the polycondensation reaction, a polycondensation reaction product was taken out from the bottom of the reaction vessel and allowed to cool and solidify. After this solid product was pulverized with a Waring blender, this substance was washed with acetone and distilled water and dried in a vacuum oven at 120°C for 16 hours to obtain 470 g of a polyether nitrile in powder form (yield, 95%).

The polyether nitrile had a reduced viscosity $\eta_{red}$ of 2.19, which was almost the same value as that of the polyether nitrile obtained in Synthesis Example 1.

The polyether nitrile had a melting point of 364°C and a glass transition temperature (Tg) of 215°C.

The polyether nitrile was analyzed by infrared spectroscopy, and a peak indicating O-H stretching vibration of hydroxy groups was observed at wave numbers of 3500 to 3200 $cm^{-1}$, revealing that the polymer had hydroxy groups.

The infrared absorption spectrum is shown in Fig. 2. Although the peak indicating O-H stretching vibration of hydroxy groups is smaller than other peaks because the end hydroxy groups of the polyether nitrile are chemical structures much fewer than the large number of main structures of repeating units of the polyether nitrile, the peak indicating O-H stretching vibration of hydroxy groups was able to be observed as described above.

The polyether nitrile had an MFR of 0 g/10 min as measured by the above analysis method at 390°C under a load of 5000 g in accordance with ISO 1133 after being heated in air at 400°C for 10 minutes.

<Example 1> (Production of polyether nitrile molding material)

On a stainless-steel plate of 150 mm × 150 mm × 5 mm, a polyimide film was mounted, and a 20-mm-wide spacer having a space 1 mm thick, 90 mm long, and 40 mm wide was further placed. The spacer was filled with 5 g of the polyether nitrile in powder form obtained in Synthesis Example 1. Furthermore, a polyimide film was put thereon, and another stainless-steel plate of 150 mm × 150 mm × 5 mm was placed thereon (hereinafter, the resulting assembly is referred to as a "molding die"). The "molding die" was quickly loaded on a lower platen of a press molding machine (MINI TEST PRESS MP-2FH manufactured by Toyo Seiki Co., Ltd.) preliminarily heated to 400°C such that the powder did not spill out. After the "molding die" was loaded, it was held in air at 400°C for 10 minutes without pressure, and then held at 400°C for an additional 5 minutes with pressure applied up to 10 MPa by moving down an upper platen.

Thereafter, the "molding die" was removed from the platens and rapidly cooled with an attached water-cooling cold press machine. After the cooling, a polyether nitrile sheet 1 mm thick, 90 mm long, and 40 mm wide was obtained from the removed "molding die".

This sheet was cut to prepare sample pieces about 5 mm square, thereby obtaining polyether nitrile pellets.

The obtained pellets, a polyether nitrile molding material, had an MFR of 9.5 g/10 min.

<Comparative Example 1>

Using the polyether nitrile in powder form obtained in Synthesis Example 2, polyether nitrile pellets were obtained by the same operation as in Example 1.

The pellets, a polyether nitrile molding material, had an MFR of 0 g/10 min.

The present inventors have previously revealed that when molding is performed in the presence of oxygen in a molding machine, only pellets having decreased flowability can be obtained, whereas when the molding is performed under exclusion of oxygen in the molding machine, pellets having significantly high flowability can be obtained.

This time, the present inventors have elucidated the mechanism that when hydroxy groups are present at ends of a polyether nitrile, cross-linking due to intermolecular oxidative coupling is likely to occur at high temperature in the presence of oxygen, resulting in a decrease in flowability.

Thus, studies were made as described above using the polyether nitrile powder obtained in "Synthesis Example 1" above, which was obtained when the molar ratio of DCBN, a dihalobenzonitrile compound, to BP, an aromatic dihydroxy compound, was more than 1, which had an MFR for flowability retention evaluation of 1 g/10 min or more, and which had no hydroxy groups, and the polyether nitrile powder obtained in "Synthesis Example 2" above, which was obtained when the molar ratio was 1, which had an MFR for flowability retention evaluation of less than 1 g/10 min, and which had hydroxy groups.

Example 1 and Comparative Example 1 are studies in which after the "molding die" is loaded, it is held at 400°C for 10 minutes without pressure, and molding is performed with air (oxygen contained in air) flowing in.

As a result, it was revealed that the pellets in Example 1, which were obtained using the polyether nitrile of Synthesis Example 1, had high flowability during molding with an MFR of 9.5 g/10 min even if produced under processing

conditions under oxygen at high temperature.

By contrast, the pellets in Comparative Example 1, which were obtained using the polyether nitrile of Synthesis Example 2, had an MFR of 0 g/10 min, showing that the oxidative cross-linking reaction was promoted, so that the flowability during molding was completely lost.

<Example 2>

Using the polyether nitrile in powder form obtained in Synthesis Example 1, polyether nitrile pellets were obtained by the same operation as in Example 1 except that after the "molding die" was loaded, an upper platen was immediately moved down to apply pressure such that the pressure reached 10 MPa within 30 seconds, and the "molding die" was held at 400°C for 15 minutes. This operation in which after the "molding die" is loaded, an upper platen is immediately moved down to apply pressure such that the pressure reaches 10 MPa within 30 seconds means a situation where when a polyether nitrile is molded, the molding condition is set to a pressurized condition, so that oxygen does not flow into a molding apparatus, that is, molding under exclusion of oxygen.

The obtained polyether nitrile pellets had an MFR of 15.2 g/10 min.

<Comparative Example 2>

Using the polyether nitrile in powder form obtained in Synthesis Example 2, polyether nitrile pellets were obtained by the same operation as in Example 2.

The polyether nitrile pellets had an MFR of 9.0 g/10 min.

Example 2 and Comparative Example 2 are studies in which the polyether nitriles obtained in Synthesis Example 1 and Synthesis Example 2 are molded under exclusion of oxygen in order to reduce the influence of oxygen.

The pellets in Example 2, which were obtained using the polyether nitrile obtained in Synthesis Example 1, had an MFR of 15.2 g/10 min and exhibited even higher flowability during molding than in Example 1.

By contrast, the pellets in Comparative Example 2, which were obtained using the polyether nitrile obtained in Synthesis Example 2, had an MFR of 9.0 g/10 min, revealing that the flowability during molding was significantly worse than in Example 2.

From the above, it has become clear that pellets obtained by performing molding using a polyether nitrile that has a melt flow rate (MFR) of 1 g/10 min or more as measured at 390°C under a load of 5000 g in accordance with ISO 1133 after being heated in air at 400°C for 10 minutes exhibit significantly high flowability during molding. It has also become clear that pellets obtained by performing molding under exclusion of oxygen exhibit even higher flowability during molding.

It has become clear that the production method according to the present invention can provide a polyether nitrile molding material that exhibits high flowability during molding and is very useful for producing various molded articles of polyether nitrile.

## Claims

1. A polyether nitrile molding material obtained by molding a polyether nitrile that has a melt flow rate (MFR) of 1 g/10 min or more as measured at 390°C under a load of 5000 g in accordance with ISO 1133 after being heated in air at 400°C for 10 minutes.

2. The polyether nitrile molding material according to Claim 1, wherein the polyether nitrile is a polyether nitrile having no hydroxy groups.

3. The polyether nitrile molding material according to Claim 2, wherein the polyether nitrile is a polyether nitrile having a repeating unit represented by general formula (1).

[Chem. 1]

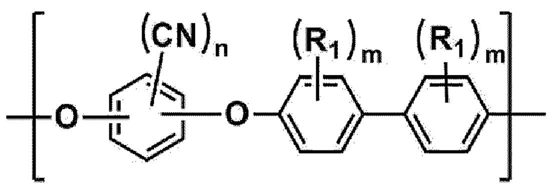

(1)

(In the formula, each $R_1$ independently represents a linear or branched alkyl group having 1 to 6 carbon atoms, a cyclic alkyl group having 5 or 6 carbon atoms, or a phenyl group, each m independently represents an integer of 0 to 4, and n represents an integer of 1 to 4.)

**4.** The polyether nitrile molding material according to Claim 3, wherein the polyether nitrile having a repeating unit represented by general formula (1) is a repeating unit represented by chemical formula (1-1).

[Chem. 2]

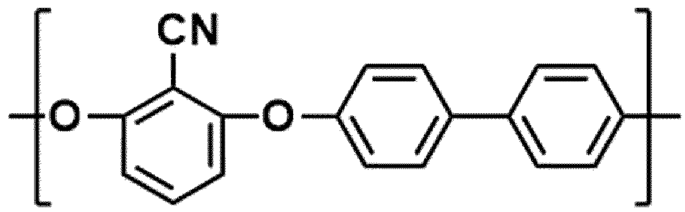

(1-1)

**5.** The polyether nitrile molding material according to Claim 3, wherein the polyether nitrile is a polyether nitrile obtained by subjecting an aromatic dihydroxy compound (I) represented by general formula (2) and a dihalobenzonitrile compound (II) represented by general formula (3) to a desalting polycondensation reaction in the presence of a basic compound with the dihalobenzonitrile compound (II) being present at a molar ratio in a range of more than 1 relative to the aromatic dihydroxy compound (I).

[Chem. 3]

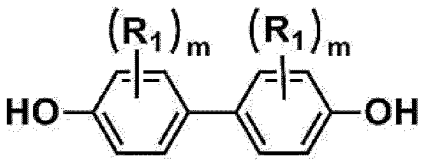

(2)

(In the formula, $R_1$ and m are as defined in general formula (1) .)

[Chem. 4]

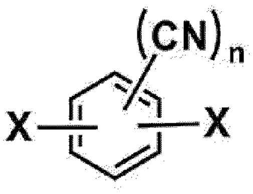

(3)

(In the formula, each X independently represents a halogen atom, and n is as defined in general formula (1).)

**6.** The polyether nitrile molding material according to Claim 5, wherein at least 4,4'-biphenol is used as the aromatic dihydroxy compound (I), and at least 2,6-dichlorobenzonitrile is used as the dihalobenzonitrile compound (II).

**7.** The polyether nitrile molding material according to any one of Claims 1 to 6, wherein the molding is performed under exclusion of oxygen or in an inert atmosphere.

**8.** A polyether nitrile resin composition molding material obtained by molding a polyether nitrile resin composition containing a polyether nitrile that has a melt flow rate (MFR) of 1 g/10 min or more as measured at 390°C under a load of 5000 g in accordance with ISO 1133 after being heated in air at 400°C for 10 minutes and at least one selected from the group consisting of (A) to (C): a thermoplastic resin material (A), an additive (B), and a filler (C).

**9.** The polyether nitrile resin composition molding material according to Claim 8, wherein the polyether nitrile is a

polyether nitrile having no hydroxy groups.

**10.** The polyether nitrile resin composition molding material according to Claim 9, wherein the polyether nitrile is a polyether nitrile having a repeating unit represented by general formula (1).

[Chem. 5]

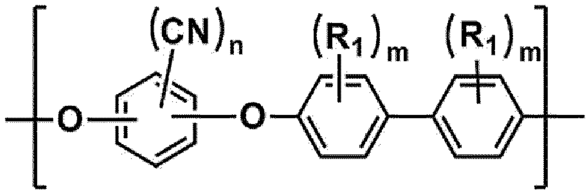

(1)

(In the formula, each $R_1$ independently represents a linear or branched alkyl group having 1 to 6 carbon atoms, a cyclic alkyl group having 5 or 6 carbon atoms, or a phenyl group, each m independently represents an integer of 0 to 4, and n represents an integer of 1 to 4.)

**11.** The polyether nitrile resin composition molding material according to Claim 10, wherein the polyether nitrile is a polyether nitrile obtained by subjecting an aromatic dihydroxy compound (I) represented by general formula (2) and a dihalobenzonitrile compound (II) represented by general formula (3) to a desalting polycondensation reaction in the presence of a basic compound with the dihalobenzonitrile compound (II) being present at a molar ratio in a range of more than 1 relative to the aromatic dihydroxy compound (I).

[Chem. 6]

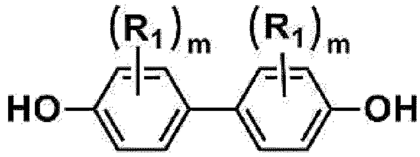

(2)

(In the formula, $R_1$ and m are as defined in general formula (1) .)

[Chem. 7]

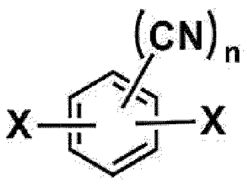

(3)

(In the formula, X represents a halogen atom, and n is as defined in general formula (1).)

**12.** The polyether nitrile resin composition molding material according to any one of Claims 8 to 11, wherein the molding is performed under exclusion of oxygen or in an inert atmosphere.

**13.** A method for producing a polyether nitrile molding material, the method comprising performing molding using a polyether nitrile that has a melt flow rate (MFR) of 1 g/10 min or more as measured at 390°C under a load of 5000 g in accordance with ISO 1133 after being heated in air at 400°C for 10 minutes.

**14.** The method for producing a polyether nitrile molding material according to Claim 13, wherein the polyether nitrile is a polyether nitrile having no hydroxy groups.

**15.** The method for producing a polyether nitrile molding material according to Claim 14, wherein the polyether nitrile is a

polyether nitrile having a repeating unit represented by general formula (1).

[Chem. 8]

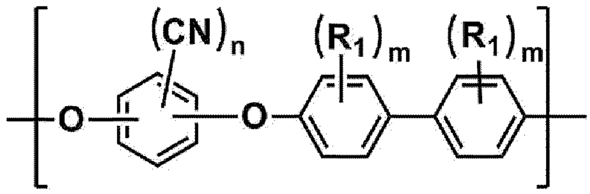
(1)

(In the formula, each $R_1$ independently represents a linear or branched alkyl group having 1 to 6 carbon atoms, a cyclic alkyl group having 5 or 6 carbon atoms, or a phenyl group, each m independently represents an integer of 0 to 4, and n represents an integer of 1 to 4.)

**16.** The method for producing a polyether nitrile molding material according to Claim 15, wherein the polyether nitrile having a repeating unit represented by general formula (1) is a repeating unit represented by chemical formula (1-1).

[Chem. 9]

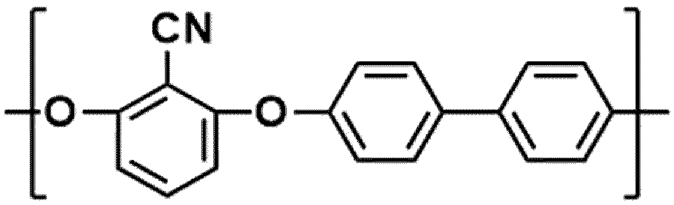
(1-1)

**17.** The method for producing a polyether nitrile molding material according to Claim 15, wherein the polyether nitrile is a polyether nitrile obtained by subjecting an aromatic dihydroxy compound (I) represented by general formula (2) and a dihalobenzonitrile compound (II) represented by general formula (3) to a desalting polycondensation reaction in the presence of a basic compound with the dihalobenzonitrile compound (II) being present at a molar ratio in a range of more than 1 relative to the aromatic dihydroxy compound (I).

[Chem. 10]

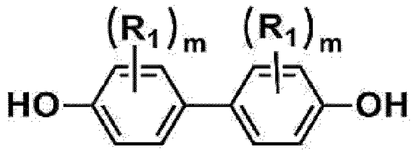
(2)

(In the formula, $R_1$ and m are as defined in general formula (1) .)

[Chem. 11]

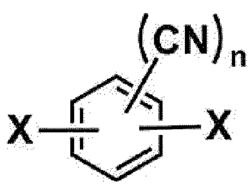
(3)

(In the formula, X represents a halogen atom, and n is as defined in general formula (1).)

**18.** The method for producing a polyether nitrile molding material according to Claim 17, wherein at least 4,4'-biphenol is

used as the aromatic dihydroxy compound (I), and at least 2,6-dichlorobenzonitrile is used as the dihalobenzonitrile compound (II).

**19.** The method for producing a polyether nitrile molding material according to any one of Claims 13 to 18, wherein the molding is performed under exclusion of oxygen or in an inert atmosphere.

**20.** A method for producing a polyether nitrile resin composition molding material, the method comprising performing molding using a polyether nitrile resin composition containing a polyether nitrile that has a melt flow rate (MFR) of 1 g/10 min or more as measured at 390°C under a load of 5000 g in accordance with ISO 1133 after being heated in air at 400°C for 10 minutes and at least one selected from the group consisting of (A) to (C): a thermoplastic resin material (A), an additive (B), and a filler (C).

**21.** The method for producing a polyether nitrile resin composition molding material according to Claim 20, wherein the polyether nitrile is a polyether nitrile having no hydroxy groups.

**22.** The method for producing a polyether nitrile resin composition molding material according to Claim 21, wherein the polyether nitrile is a polyether nitrile having a repeating unit represented by general formula (1).

[Chem. 12]

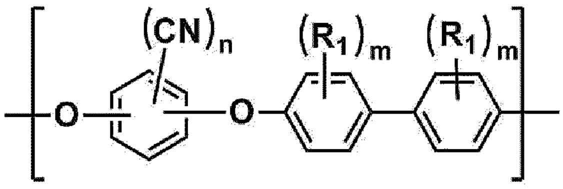

(1)

(In the formula, each $R_1$ independently represents a linear or branched alkyl group having 1 to 6 carbon atoms, a cyclic alkyl group having 5 or 6 carbon atoms, or a phenyl group, each m independently represents an integer of 0 to 4, and n represents an integer of 1 to 4.)

**23.** The method for producing a polyether nitrile resin composition molding material according to Claim 22, wherein the polyether nitrile is a polyether nitrile obtained by subjecting an aromatic dihydroxy compound (I) represented by general formula (2) and a dihalobenzonitrile compound (II) represented by general formula (3) to a desalting polycondensation reaction in the presence of a basic compound with the dihalobenzonitrile compound (II) being present at a molar ratio in a range of more than 1 relative to the aromatic dihydroxy compound (I).

[Chem. 13]

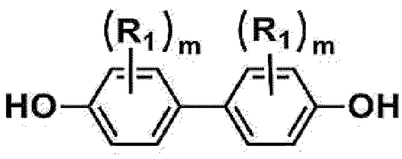

(2)

(In the formula, $R_1$ and m are as defined in general formula (1) .)

[Chem. 14]

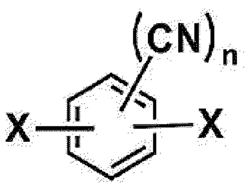

(3)

(In the formula, X represents a halogen atom, and n is as defined in general formula (1).)

**24.** The method for producing a polyether nitrile resin composition molding material according to any one of Claims 20 to 23, wherein the molding is performed under exclusion of oxygen or in an inert atmosphere.

FIG. 1

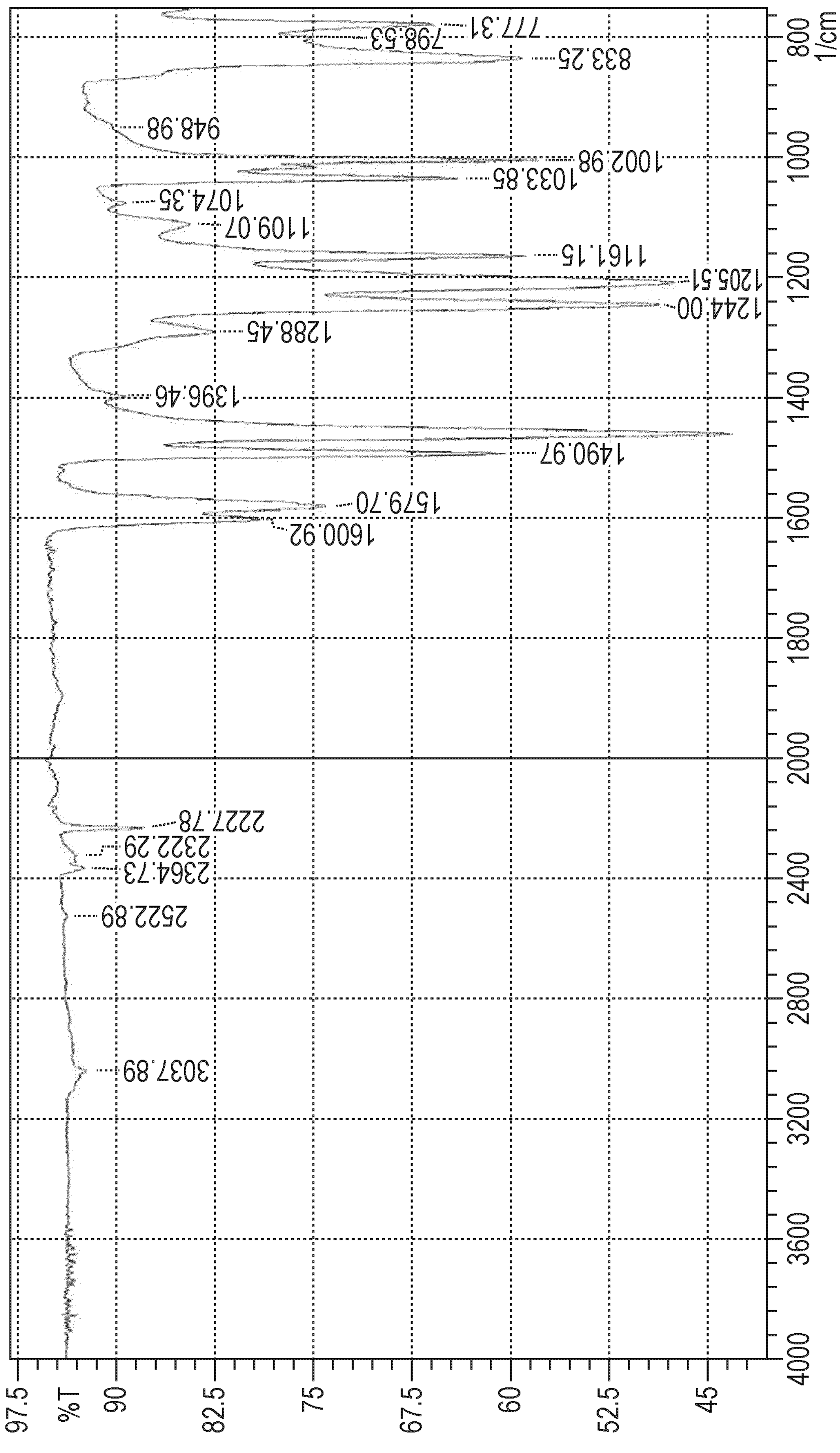
%T
97.5
90
82.5
75
67.5
60
52.5
45
1/cm
4000
3600
3200
2800
2400
2000
1800
1600
1400
1200
1000
800
3037.89
2522.89
2364.73
2322.29
2227.78
1600.92
1579.70
1490.97
1396.46
1288.45
1244.00
1205.51
1161.15
1109.07
1074.35
1033.85
1002.98
948.98
833.25
798.53
777.31

FIG. 2

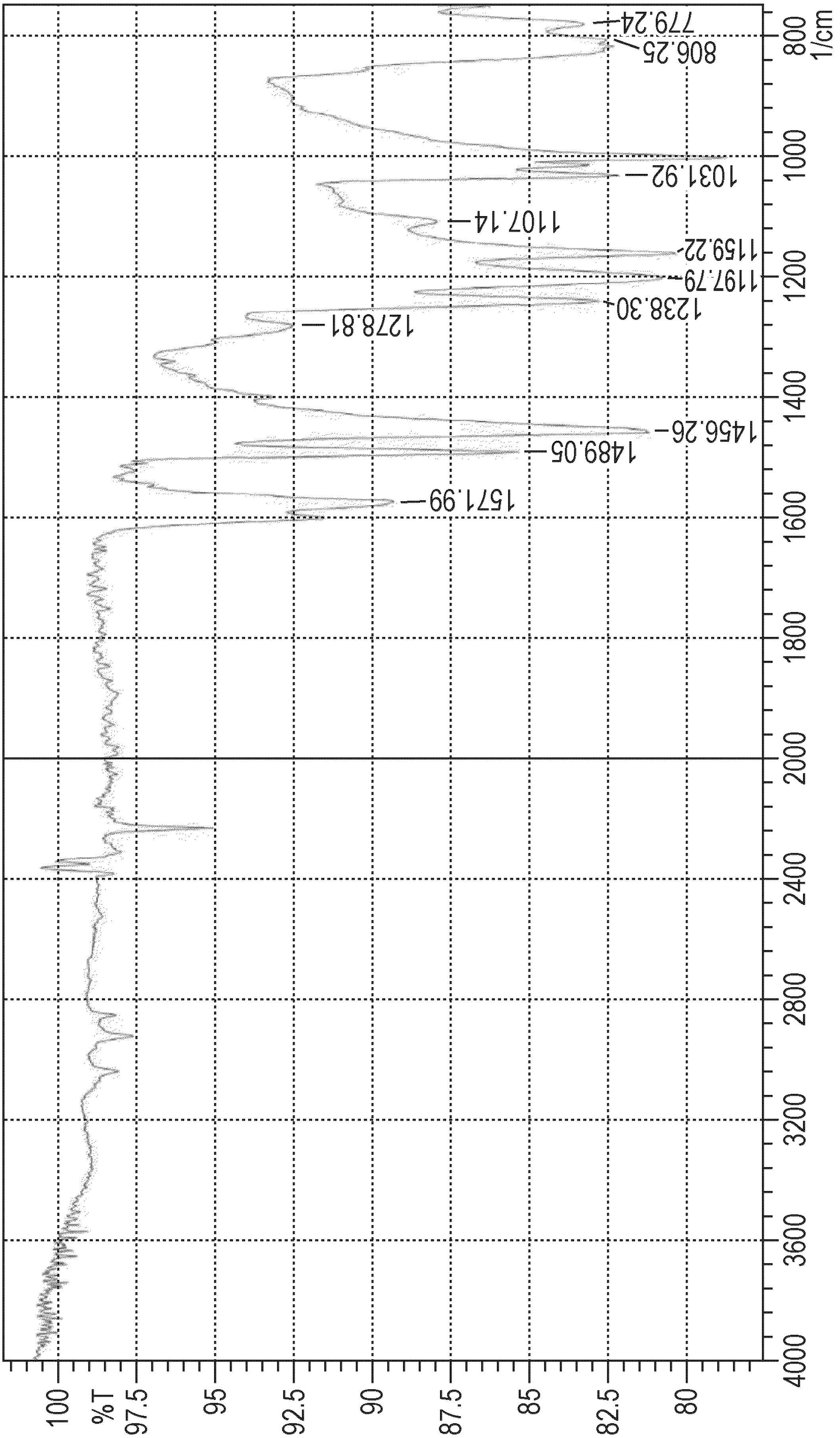

%T
100
97.5
95
92.5
90
87.5
85
82.5
80
4000
3600
3200
2800
2400
2000
1800
1600
1400
1200
1000
800
1/cm
1571.99
1489.05
1456.26
1278.81
1238.30
1197.79
1159.22
1107.14
1031.92
806.25
779.24

| INTERNATIONAL SEARCH REPORT | International application No. **PCT/JP2023/012081** |
|---|---|

**A. CLASSIFICATION OF SUBJECT MATTER**

***C08G 65/40***(2006.01)i; ***C08K 3/013***(2018.01)i; ***C08L 71/10***(2006.01)i; ***C08L 101/00***(2006.01)i
FI: C08G65/40; C08K3/013; C08L71/10; C08L101/00

According to International Patent Classification (IPC) or to both national classification and IPC

**B. FIELDS SEARCHED**

Minimum documentation searched (classification system followed by classification symbols)

C08G65/00-67/48; C08L1/00-101/16; C08K3/00-13/08

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X<br><br><br>Y | JP 61-055120 A (IDEMITSU KOSAN CO., LTD.) 19 March 1986 (1986-03-19)<br>claims, page 2, lower left column, line 18 to page 2, lower right column, line 6, page 3, lower right column, lines 9-15, examples 1-2 | 1-6, 13-18<br><br><br>7-12, 19-24 |
| X<br><br>Y | JP 61-246233 A (IDEMITSU KOSAN CO., LTD.) 01 November 1986 (1986-11-01)<br>page 4, lower left column, lines 8-11, example 3 | 1-6, 13-18<br><br>7-12, 19-24 |
| X<br><br>Y | JP 61-244526 A (IDEMITSU KOSAN CO., LTD.) 30 October 1986 (1986-10-30)<br>example 6 | 1-6, 13-18<br><br>7-12, 19-24 |
| X<br><br>Y | JP 61-241119 A (IDEMITSU KOSAN CO., LTD.) 27 October 1986 (1986-10-27)<br>example 6 | 1-6, 13-18<br><br>7-12, 19-24 |
| Y | JP 60-258250 A (IDEMITSU KOSAN CO., LTD.) 20 December 1985 (1985-12-20)<br>claims | 8-12, 20-24 |

☑ Further documents are listed in the continuation of Box C. ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **23 May 2023** | **06 June 2023** |
| Name and mailing address of the ISA/JP<br>**Japan Patent Office (ISA/JP)**<br>**3-4-3 Kasumigaseki, Chiyoda-ku, Tokyo 100-8915**<br>**Japan** | Authorized officer<br><br>Telephone No. |

Form PCT/ISA/210 (second sheet) (January 2015)

**INTERNATIONAL SEARCH REPORT**

International application No.
**PCT/JP2023/012081**

**C. DOCUMENTS CONSIDERED TO BE RELEVANT**

| Category* | Citation of document, with indication, where appropriate, of the relevant passages | Relevant to claim No. |
|---|---|---|
| Y | JP 61-072056 A (IDEMITSU KOSAN CO., LTD.) 14 April 1986 (1986-04-14)<br>claims | 8-12, 20-24 |
| Y | JP 62-116658 A (IDEMITSU KOSAN CO., LTD.) 28 May 1987 (1987-05-28)<br>claims | 8-12, 20-24 |
| Y | JP 64-033153 A (IDEMITSU KOSAN CO., LTD.) 03 February 1989 (1989-02-03)<br>claims | 8-12, 20-24 |
| Y | JP 07-207526 A (IDEMITSU KOSAN CO., LTD.) 08 August 1995 (1995-08-08)<br>paragraph [0028] | 7, 12, 19, 24 |
| Y | JP 05-140442 A (HOECHST AG) 08 June 1993 (1993-06-08)<br>examples 1-7 | 7, 12, 19, 24 |

Form PCT/ISA/210 (second sheet) (January 2015)

**INTERNATIONAL SEARCH REPORT**
**Information on patent family members**

International application No.
**PCT/JP2023/012081**

| Patent document cited in search report | Publication date (day/month/year) | Patent family member(s) | Publication date (day/month/year) |
|---|---|---|---|
| JP 61-055120 A | 19 March 1986 | (Family: none) | |
| JP 61-246233 A | 01 November 1986 | (Family: none) | |
| JP 61-244526 A | 30 October 1986 | US 4640974 A<br>example 11<br>EP 192262 A2<br>EP 445840 A2 | |
| JP 61-241119 A | 27 October 1986 | (Family: none) | |
| JP 60-258250 A | 20 December 1985 | (Family: none) | |
| JP 61-072056 A | 14 April 1986 | (Family: none) | |
| JP 62-116658 A | 28 May 1987 | (Family: none) | |
| JP 64-033153 A | 03 February 1989 | (Family: none) | |
| JP 07-207526 A | 08 August 1995 | (Family: none) | |
| JP 05-140442 A | 08 June 1993 | EP 0513658 A2<br>examples 1-7 | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 60147439 A
- JP 61055120 A